# NOUVEAU FASCICULE DE BREVET EUROPEEN

(11) **EP 0 793 601 B2**
(45) Date de publication et mention de la décision concernant l'opposition: **18.12.2002**
(45) Mention de la délivrance du brevet: 07.07.1999
(21) Numéro de dépôt: 96931874.0
(22) Date de dépôt: 19.09.1996
(51) Int. Cl.: B65D 1/02, C08J 5/18

(54) **PROCEDE DE CONDITIONNEMENT DE LONGUE DUREE D'UNE BOISSON A BASE DE FRUITS ET/OU DE LEGUMES**
VERPACKUNGSVERFAHREN ZUR LANGZEITIGEN AUFBEWAHRUNG EINES OBST- ODER GEMÜSEGETRÄNKS
LONG-LIFE PACKAGING PROCESS FOR A FRUIT AND/OR VEGETABLE BEVERAGE

(30) Priorité: 21.09.1995 FR 9511104; 18.04.1996 FR 9604854
(43) Date de publication de la demande: 10.09.1997
(73) Titulaire: PERNOD-RICARD, 75008 Paris (FR)
(72) Inventeur: NOBLE, Philippe, F-94000 Creteil (FR); ROBICHON, Patrice, F-78400 Chatou (FR)
(74) Mandataire: Warcoin, Jacques
(86) Numéro de dépôt international: FR9601457
(87) Numéro de publication internationale: WO97010997

(56) Documents cités:
- EP-A- 0 267 443
- FR-A- 2 148 416
- FR-A- 2 160 999
- FR-A- 2 338 784
- LAINCHBURY: 'HIGH NITRILE RESINS FOR BARRIER PACKAGING' ENGINEERING PLASTICS vol. 4, no. 1, 1991, pages 39 - 49, XP000219324
- Technical Information Vistron Co.,1970,USA,"BAREX 210"

## Description

La présente invention a pour objet un nouveau procédé de conditionnement de longue durée dans un emballage en matière polymère, des purs jus, des jus à base de concentré, des nectars de fruits et/ou de légumes. Elle concerne également l'utilisation d'un film polymère pour la réalisation d'un conditionnement en contact avec des purs jus, des jus à base de concentré, des nectars de fruits et/ou de légumes afin de limiter la dégradation de celles-ci et un procédé destiné à limiter la dégradation des purs jus, des jus à base de concentré, des nectars de fruits et/ou de légumes contenues dans un conditionnement en matière polymère.

Les conditionnements pour boissons à base de fruits et/ou de légumes doivent préserver en premier lieu les qualités organoleptiques de ces breuvages. Les conditionnements en verre sont jusqu'à présent les plus couramment utilisés pour leurs propriétés barrières aux gaz, mais surtout pour leur grande inertie chimique. La tendance générale est cependant de remplacer ce matériau par des matières polymères qui présentent les avantages bien connus à divers titres, légèreté, incassabilité.

Cependant, l'emploi de tels conditionnements a jusqu'à présent été limité, compte tenu des inconvénients présentés, notamment la perte des qualités organoleptiques au cours du temps, liée à la fois à la perméabilité, mais aussi aux interactions physico-chimiques entre les arômes et le polymère.

En effet, l'utilisation de polymère pour le conditionnement de produits alimentaires entraîne souvent des problèmes d'interaction contenu/contenant.

Ces problèmes sont couramment décrits dans la littérature et sont essentiellement :

le scalping : i.e. adsorption de constituants de l'aliment à la surface du matériau. Il conduit à une baisse de l'intensité aromatique et si l'adsorption est sélective à une modification de l'arôme et du goût. Ce phénomène régi par les coefficients de partage de ces substances entre l'aliment et le matériau, sera d'autant plus important dans le cas d'aliments aqueux comme les jus de fruits.

L'absorption : après l'adsorption, il peut y avoir absorption des arômes par le polymère, diffusion à l'intérieur de celui-ci puis désorption sur la face externe. Là encore, il y aura soit perte, soit modification de l'intensité aromatique.

### La réaction chimique entre l'arôme et le polymère :

Ce dernier pouvant être aussi bien réactif que catalyseur. L'expérience suivant met en évidence ce phénomène : une solution modèle d'une dizaine d'arômes a été mise au contact d'un polymère (PP). L'analyse par chromatographie en phase gazeuse a montré que l'on retrouvait alors beaucoup plus de substances que la dizaine présentes initialement.

De même, un jus de fruit et/ou de légume contenu dans un conditionnement réalisé en polyéthylène térephtalate (PET) ne résiste pas à un test de vieillissement de six mois. On observe en particulier une oxydation prématurée de celui-ci.

Afin d'éviter cet inconvénient, on a proposé un conditionnement multicouche constitué d'une couche interne d'un copolymère éthylène-alcool vinylique recouverte de part et d'autre d'un film de polyéthylène par l'intermédiaire d'un liant. Néanmoins, un tel conditionnement est opaque ou à la limite présente une transparence de contact si le matériau polyéthylène est remplacé par du polypropylène.

Par ailleurs, les procédés d'extrusion mis en oeuvre pour de tels conditionnements sont complexes ce qui augmente le prix de revient de ces derniers.

On a également proposé des conditionnements multicouches constitués d'une couche interne de nylon (PA) ou d'un copolymère éthylène-alcool vinylique recouverte par deux couches externes en polyéthylène térephtalate obtenu par un procédé de co-injection soufflage. Cependant, ces conditionnements ont un prix de revient très élevé du fait des difficultés de fabrication et sont quasiment abandonnés à l'heure actuelle.

On a également proposé un conditionnement monocouche à base de polyéthylène naphtalate (PEN) qui présente d'excellentes qualités de conservation et de transparence. Cependant, ces conditionnements sont également très chers, ce qui limite leur développement.

On a également proposé un conditionnement monocouche à base d'un alliage PET + PA (Polyamide) + sels de Cobalt, qui présente d'excellentes qualités de conservation et de transparence, ainsi que des propriétés en tant qu'absorbeur d'oxygène. Cependant, l'application de ce matériau dans le domaine de l'alimentation n'a jamais pu être démontrée.

Par ailleurs, il est bien connu d'utiliser un copolymère d'acrylate de méthyle-acrylonitrile-butadiène commercialisé sous le nom de marque Barex 210® (fourni par la société B.P. Chemicals) pour ses propriétés barrière aux gaz. Un tel matériau a donc déjà été utilisé en tant que contenant pour des boissons gazeuses, c'est par exemple le cas dans les brevets US 3 862 288, US 2 963 399 et US 4 054 630.

Mais il faut préciser que les propriétés de barrière aux gaz sont tout à fait différentes de celles relatives à l'inertie chimique vis-à-vis des arômes. Comme le montre les nombreuses publication mentionnées ci-après, ce problème, bien après le dépôt des brevets américains précités, n'était pas résolu.

Mannheim et al, Food et Packaging Interactions, 1988, chap. 6, pages 68-82 étudie l'interaction entre des produits citronés et des structures laminées telles que le polyéthylène, le polyéthylène alcool vinylique, le surlyn® (résine ionomère), et le polyéthylène linéaire basse densité.

Gilbert et al., Instrumental Analysis of Foods, 1983, vol. 1, pages 405-411 étudient les propriétés barrière des films polymériques vis-à-vis de vapeurs aromatiques variées (Polypropylène, PVDC, polyéthylène).

Matsui et al., J. Agric. Food Chem. 1992, 40, 1902-1905, étudient la sorption d'arômes par des films d'emballage tels que le polyéthylène de moyenne densité, le polyéthylène alcool vinylique.

Benet el al., Analysis, (1992) 20, 391-396 étudie l'interaction de bouchons en polyéthylène haute densité avec des substances organiques volantes.

L'objet de la présente invention est de proposer un nouveau procédé de conditionnement à base d'une matière polymère permettant de préserver les qualités organoleptiques des purs jus, jus à base de concentré et nectars de fruits et/ou de légumes pour une très longue durée, tout en possédant les autres qualités suivantes :
- transparence,
- faible coût de fabrication.

Le conditionnement en matière polymère selon l'invention est caractérisé en ce qu'il est constitué d'une monocouche et en ce que la monocouche est formée d'un terpolymère acrylate de méthyle-acrylonitrile-butadiène.

Par l'expression "jus de fruits et/ou de légumes", on entendra dans le cadre du présent exposé les dispersions aqueuses résultant du pressage par tout moyen approprié de la matière présente à l'intérieur des fruits et/ou de légumes éventuellement après les traitements communément utilisés dans l'industrie considérée, notamment les traitements de stabilisation microbiologique (pasteurisation, stérilisation, ajout de conservateur), les traitements de dilution et de filtration. Dans l'ordre de qualité, on citera les purs jus, les jus à base de concentré, les nectars.

Parmi les purs jus, jus à base de concentré et nectars de fruits, on peut citer ceux à base d'orange, de citron, de tomate, de pamplemousse.

Parmi les purs jus, jus à base de concentré et nectars de légumes, on peut citer ceux à base de :

| | |
|---|---|
| céleri | carotte |
| laitue | betterave rouge |
| artichaut | oignon |
| chou de bruxelles | asperge |
| poivron | chou-fleur |
| salsifis | épinard |
| chou vert | brocoli |
| poireaux | petit pois |
| aubergine | courgette |
| bette | fenouil |
| navet | potiron |
| haricot vert | |

Parmi les mélanges des différents fruits et légumes, on peut citer à titre non limitatif les mélanges suivants :
- carotte - citron
- tomate, carotte, céleri, citron, betterave rouge, laitue, oignon
- tomate, céleri, citron
- carotte, orange
- tomate, carotte, céleri, citron, betterave rouge, pamplemousse, orange.

On pourra également mélanger lesdits purs jus, jus à base de concentré et nectars à base de fruits et/ou de légumes avec du lait ou ses dérivés.

Par "conditionnement", on entendra tout emballage susceptible de contenir la boisson, que ce soit sous forme de bouteille, de boîte ou d'autres systèmes fermés équivalents, y compris les outres et les poches.

Parmi les terpolymères convenant dans le cadre de la présente invention, on préférera ceux présentant une perméabilité à l'oxygène inférieure à 0,8 cm³. mm/m².jour. 10⁵ Pa (1 bar = 10⁵ Pa) à 23° C, à une humidité relative de 100%.

Ces matériaux sont disponibles sur le marché ou peuvent être obtenus par l'homme du métier de manière connue.

De préférence, le terpolymère présente un taux de butadiène compris entre 8 et 20 %.

Avantageusement, le terpolymère est choisi dans le groupe constitué par le terpolymère dont le taux de butadiène est d'environ 10 % ou le terpolymère dont le taux de butadiène est d'environ 18 %.

Ces polymères sont commercialisés par la société BP Chemicals sous les noms de marque, respectivement Barex 210® et Barex 218®.

Le polymère Barex 210® présente une perméabilité à l'oxygène de 0,3 cm³.mm/m².jour.10⁵ Pa à 23°C.

Le polymère Barex 218® présente une perméabilité à l'oxygène de 0,6 cm³.mm/m².jour.10⁵ Pa à 23°C.

Ces polymères sont déjà utilisés en tant que conditionnement pour différents produits tels que les articles cosmétiques, les produits chimiques domestiques et les articles à usage médical.

Ils sont également utilisés pour certains produits de consommation comme les huiles de table, les huiles essentielles, les épices, les sauces vinaigrette. Cependant, tous les produits qui ont été conditionnés jusqu'à présent par de tels polymères ne requièrent pas la préservation des arômes qui sont propres aux jus de fruits et/ou de légumes.

En effet, le problème du conditionnement des purs jus, des jus à base de concentré, des nectars de fruits et/ou de légumes est un problème spécifique du fait de la nature essentiellement aqueuse du liquide dans lequel les substances, notamment aromatiques, sont présentes.

Les huiles essentielles étant peu solubles dans l'eau, elles ont tendance à migrer dans les polymères avec pour conséquences :
- une baisse générale de l'intensité aromatique due à la sorption de l'ensemble des composés aromatiques,
- une modification de l'arôme, due à des sorptions préférentielles de certains constituants de l'arôme,
- une dégradation des constituants de l'arôme avec formation au contact du polymère de nouvelles molécules dénaturant le profil organoleptique du produit. Ceci peut se faire soit par réactions chimiques directes avec le substrat, soit par réactions catalysées par le substrat.

Ces phénomènes sont d'autant plus importants dans le cas des boissons que les arômes sont très peu solubles dans l'eau et ont par contre, une forte affinité pour les polymères.

La mise en oeuvre de tels polymères est effectuée sur une machine d'extrusion soufflage usuelle telle que celle utilisée pour le PVC avec ou sans bi-orientation.

II s'agit donc d'une mise en oeuvre peu onéreuse, ne nécessitant pas l'utilisation d'une machine spécifique au produit.

Les conditionnements se présentent donc sous la forme d'un matériau monocouche obtenu par extrusion. L'épaisseur de la monocouche varie selon la nature du conditionnement, mais sera de préférence comprise entre 200 et 500 µm.

Elle est avantageusement comprise entre 300 et 400 µm mais pourra descendre jusqu'à 50 µm pour les films et aller jusqu'à 1 mm ou plus pour les gros emballages (fûts, ...).

Les conditionnements selon l'invention peuvent conserver des purs jus, des jus à base de concentré, des nectars de fruits et/ou de légumes 12 mois dans les mêmes conditions qu'une bouteille en verre, c'est-à-dire sans dégradation substantielle des qualités organoleptiques.

Ils sont de plus transparents, faciles à transformer et bon marché.

L'invention concerne également l'utilisation d'un terpolymère acrylate de méthyle-acrylonitrile-butadiène tel que décrit précédemment sous forme monocouche pour la réalisation d'un conditionnement en contact avec des purs jus, des jus à base de concentré, des nectars de fruits et/ou de légumes afin de limiter la dégradation des qualités organoleptiques de ceux-ci.

Elle conceme également un procédé de conditionnement destiné à limiter la dégradation des qualités organoleptiques des purs jus, des jus à base de concentré, des nectars de fruits et/ou de légumes dans un emballage en matière polymère, sous forme d'une monocouche d'un terpolymère acrylate de méthyle-acrylonitrile-butadiène tel que décrit précédemment.

L'invention est maintenant illustrée par les exemples suivants donnés à titre illustratif.

### Exemple 1

Des bouteilles constituées d'une monocouche de Barex 218® commercialisé par la société BP Chemicals, d'épaisseur moyenne 350 µm, ont été réalisées par transformation sur une machine d'extrusion bi-orientation soufflage pour PVC.

Les bouteilles sont remplies d'un jus d'orange de marque PAMPRYL® à froid après flash pasteurisation et ajout d'un bactériostatique. Le jus a été préalablement désaéré par bullage d'azote avant flashage, et les bouteilles purgées à l'azote avant soutirage. L'oxygène dissous initial est donc très faible, inférieur à 0.5 ppm.

### Exemple 2 (comparatif)

Une bouteille de verre de forme similaire à celle de l'exemple 1 a été remplie de la même manière avec le jus d'orange précité. L'épaisseur moyenne du verre est 3 mm.

### Exemple 3 (comparatif)

Une bouteille de forme similaire à celle de l'exemple 1 en polyéthylène térephtalate a été remplie, selon la même méthode, du jus d'orange précité. L'épaisseur moyenne de la bouteille est de 300 µm.

Toutes les bouteilles sont bouchées avec une capsule à joint PE/ALU/PE.

Plusieurs tests physico-chimiques ont été réalisés sur les bouteilles des exemples 1, 2 et 3 afin d'évaluer les propriétés des différents conditionnements.

### Exemple 4 - Profil organoleptique

Les bouteilles sont laissées 12 mois à 20°C et les qualités organoleptiques sont mesurées après ce laps de temps. Le jus conditionné en polyéthylène térephtalate (exemple 3) est rejeté avec des notes oxydées et cuites dominantes On observe en outre une baisse de l'intensité aromatique ainsi qu'une perte de la typicité ORANGE.

Le jus d'orange conditionné selon l'exemple 1 n'est pas significativement différent du jus d'orange conditionné en verre (exemple 2) qui constitue la référence.

### Exemple 5 - Evolution du protentiel redox

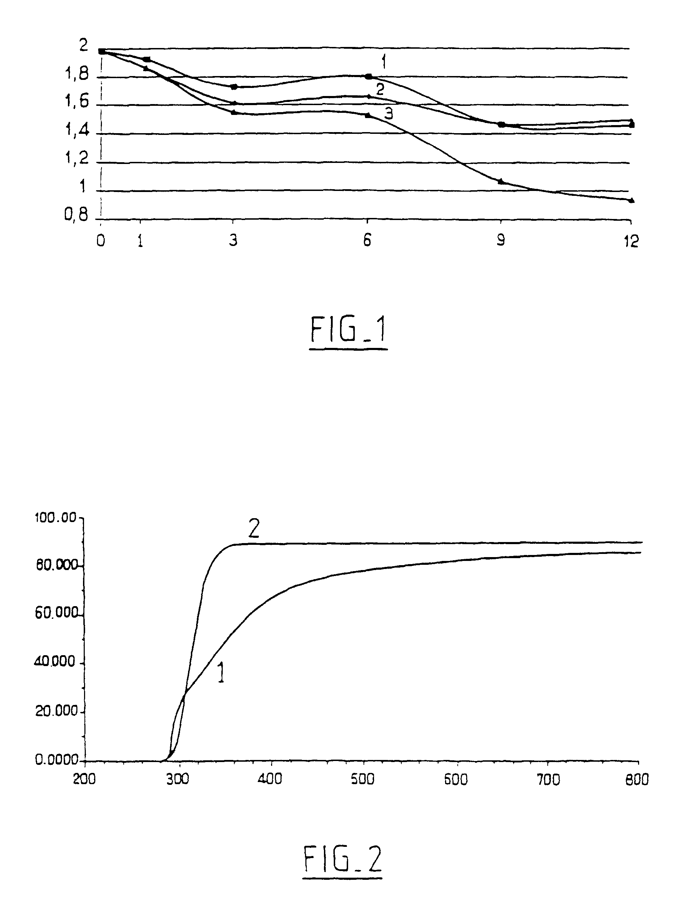

La figure 1 annexée représente l'évolution de la proportion des réducteurs totaux en microgramme/litre en fonction du temps pour des prélèvements effectués 1, 3, 6, 9 et 12 mois à partir du début du test. On remarque une évolution similaire entre le conditionnement de l'exemple 1 (selon l'invention) et de l'exemple 2 (verre) alors que le conditionnement de l'exemple 3 (PET) présente un décrochement très important à partir de six mois de vieillissement, ce qui indique une très forte oxydation.

Ce test est en excellente corrélation avec l'évolution des qualités organoleptiques telles qu'elles ont été mesurées à l'exemple 4.

### Exemple 6 - Etude du photovieillissement

La photosensibilité des jus étant un facteur très important, déterminant la qualité de ces derniers, les propriétés barrières des matériaux des conditionnements des exemples 1 et 2 ont été évaluées dans l'ultra-violet et les résultats sont indiqués à la figure 2 en annexe dans laquelle la transmittance est indiquée en fonction de la longueur d'onde.

Les conditionnements sont exposés respectivement 48 heures et 7 jours à la lumière solaire et sont comparés à un conditionnement en verre stocké à l'obscurité (témoin).

Après 7 jours d'exposition aux ultra-violet, le jus conditionné selon l'exemple 1 devient plus terpénique, mais les notes cuites et oxydées ne sont pas plus développées que dans le témoin. Le jus conditionné selon l'exemple 2 perd sa typicité ORANGE et est le plus altéré.

## Revendications

1. Procédé de conditionnement de purs jus, de jus à base de concentré, de nectars de fruits et/ou de légumes dans un emballage en matière polymère, dans les mêmes conditions qu'une bouteille en verre, c'est-à-dire sans dégradation des qualités organoleptiques pendant 12 mois, cet emballage consistant en un film sous la forme d'une monocouche d'un terpolymère acrylate de méthyle-acrylonitrile-butadiène.

2. Procédé selon la revendication 1, dans lequel la monocouche est obtenue par extrusion.

3. Procédé selon la revendication 1 ou 2, dans lequel le terpolymère acrylate de méthyle-acrylonitrile-butadiène présente une perméabilité à l'oxygène inférieure à 0,8 cm³.mm/m².jour.10⁵ Pa à 23°C, à une humidité relative de 100 %.

4. Procédé selon l'une des revendications 1 à 3, dans lequel le terpolymère présente un taux de butadiène compris entre 8 et 20 %.

5. Procédé selon la revendication 4, dans lequel le terpolymère est choisi dans le groupe constitué par le terpolymère dont le taux de butadiène est d'environ 10 % et le terpolymère dont le taux de butadiène est d'environ 18 %.

6. Procédé selon l'une des revendications 2 à 5, dans lequel la monocouche présente une épaisseur comprise entre 200 et 500 µm.

7. Procédé selon l'une des revendications 2 à 6, dans lequel le conditionnement se présente sous la forme d'une bouteille.

8. Procédé selon l'une des revendications 1 à 7, dans lequel la boisson est constituée d'une dispersion aqueuse résultant du pressage de la matière présente à l'intérieur des fruits et/ou de légume.

9. Procédé selon l'une des revendications 1 ou 8, **caractérisé**
**en ce que** les purs jus, les jus à base de concentré, les nectars de fruits sont à base d'orange, de citron, de tomate, de pamplemousse ou leur mélange.

10. Procédé selon l'une des revendication 1 ou 8, **caractérisé en ce que** les purs jus, les jus à base de concentré, les nectars de légumes sont à base de céleri, laitue, artichaut, chou de Bruxelles, poivron, salsifis, chou vert, poireaux, aubergine, bette, navet, haricot vert, carotte, betterave rouge, oignon, asperge, chou-fleur, épinard, brocoli, petit pois, courgette, fenouil, potiron ou leur mélange.

11. Procédé selon l'une des revendications 1, 8 à 10 **caractérisé en ce que** les purs jus, les jus à base de concentré, les nectars de fruits et/ou de légumes sont à base des mélanges suivants: carotte - citron; tomate, carotte, céleri, citron, betterave rouge, laitue, oignon; tomate, céleri, citron; carotte, orange; tomate, carotte, céleri, citron, betterave rouge, pamplemousse, orange.

12. Procédé selon l'une des revendications précédentes, **caractérisé en ce que** les purs jus, les jus à base de concentré, les nectars de fruits et/ou de légumes sont mélangés avec du lait ou ses dérivés.

## Claims

1. Method for packaging pure juices, concentrate-based juices, and nectars of fruit and/or vegetables, in packaging made of polymeric material, under the same conditions as a glass bottle, namely without the organoleptic properties deteriorating over 12 months, this packaging consisting of a film in the form of a monolayer of a methyl-acrylonitrile-butadiene acrylate terpolymer.

2. Method according to claim 1, wherein the monolayer is obtained by extrusion.

3. Method according to claim 1 or 2, wherein the methylacrylonitrile-butadiene acrylate terpolymer has an oxygen permeability below 0.8 cm².mm/m² day. 10⁵ Pa at 23°C, at a relative humidity of 100 %.

4. Method according to one of claim 1 to 3, wherein the terpolymer has a butadiene content of between 8 and 20 %.

5. Method according to claim 4, wherein the terpolymer is chosen from the group consisting of a terpolymer of which the butadiene content is approximately 10 % and a terpolymer of which the butadiene content is approximately 16 %.

6. Method according to one of claims 2 to 5, wherein the monolayer has a thickness of between 200 and 500 µm.

7. Method according to one of claims 2 to 6, wherein the package is in the form of a bottle.

8. Method according to one of claims 1 to 7, wherein the beverage consists of an aqueous dispersion resulting from pressing the matter present inside fruit and/or vegetables.

9. Method according to either of claims 1 or 8, **characterised in that** the pure juices, concentrate-based juices, and nectars of fruit are based on oranges, lemons, tomatoes, grapefruit or mixtures thereof.

10. Method according to either of claims 1 or 8, **characterised in that** the pure juices, concentrate-based juices, and nectars of vegetables are based on celery, lettuce, artichoke, Brussels sprouts, peppers, salsify, green cabbage, leeks, aubergines, chard, turnip, French beans, carrots, beetroot, onions, asparagus, cauliflower, spinach, broccoli, green peas, courgettes, fennel and pumpkin or mixtures thereof.

11. Method according to either of claims 1, 8 to 10, **characterised in that** the pure juices, concentrate-based juices, and nectars of fruit and/or vegetables are based on the following mixtures : carrots - lemons; tomatoes, carrots, celery, lemons, beetroot, lettuce and onion; tomato, celery, lemon; carrots, oranges; tomatoes, carrots, celery, lemons, beetroot, grapefruit, oranges.

12. Method according to one of the preceding claims, **characterised in that** the pure juices, concentrate-based juices, and nectars of fruit and/or vegetables are mixed with milk or its derivatives.

## Patentansprüche

1. Verfahren zum Verpacken für reine Säfte, Säfte aus Konzentraten, Nektare aus Früchten und/oder Gemüsen in einer Verpackung aus Polymer, unter den gleichen Bedingungen wie in einer Glasflasche, d. h. ohne Verschlechterung der organoleptischen Eigenschaften während 12 Monaten, **dadurch gekennzeichnet, dass** diese Verpackung aus einem Film in Form einer einlagigen Schicht aus einem Terpolymeracrylat des Methyl-Acrylonitril-Butadien besteht.

2. Verfahren gemäß Anspruch 1, **dadurch gekennzeichnet, dass** die einlagige Schicht durch Extrudieren hergestellt wird.

3. Verfahren gemäß Anspruch 1 oder 2, **dadurch gekennzeichnet, dass** das Terpolymeracrylat des Methyl-Acrylonitril-Butadien eine Sauerstoffdurchlässigkeit von weniger als 0,8 cm³.mm/m².Tag.10⁵ Pa bei einer Temperatur bei 23° C und einer relativen Feuchtigkeit von 100 % aufweist.

4. Verfahren gemäß irgendeinem der Ansprüche 1 bis 3, **dadurch gekennzeichnet, dass** das Terpolymer einen Butadiengehalt aufweist, der zwischen 8 und 20 % liegt.

5. Verfahren gemäß Anspruch 4, **dadurch gekennzeichnet, dass** das Terpolymer aus der Gruppe ausgewählt wird, die Terpolymere umfasst, deren Butadiengehalt etwa 10 % beträgt, und einem Terpolymer, dessen Butadiengehalt etwa 18 % beträgt.

6. Verfahren gemäß irgendeinem der Ansprüche 2 bis 5, **dadurch gekennzeichnet, dass** die einlagige Schicht eine Dicke zwischen 200 und 500 µm hat.

7. Verfahren gemäß irgendeinem der Ansprüche 2 bis 6, **dadurch gekennzeichnet, dass** die Verpackung die Form einer Flasche hat.

8. Verfahren gemäß irgendeinem der Ansprüche 1 bis 7, **dadurch gekennzeichnet, dass** das Getränk aus einer wässrigen Dispersion besteht, welche durch Auspressen der Stoffe erhalten wird, die im Kern von Früchten und/oder Gemüsen enthalten ist.

9. Verfahren gemäß einem der Ansprüche 1 oder 8, **dadurch gekennzeichnet, dass** das die reinen Säfte, die aus Konzentraten hergestellten Säfte, die Nektare von Früchten auf der Basis von Orangen, Zitronen, Tomaten, Pampelmusen oder Mischung aus diesen Früchten hergestellt werden.

10. Verfahren gemäß einem der Ansprüche 1 oder 8, **dadurch gekennzeichnet, dass** die reinen Säfte, die aus Konzentraten hergestellten Säfte, die Nektare von Gemüsen auf der Basis von Sellerie, Blattsalat, Artischocken, Rosenkohl, Paprika, Schwarzwurzeln, Grünkohl, Lauch, Auberginen, Mangold, Steckrüben grüne Bohnen, Karotten, rote Beete, Zwiebeln, Spargel, Blumenkohl, Spinat, Brokkoli, Erbsen, Zucchini, Fenchel, Kürbis, oder Mischungen aus diesen Gemüsen hergestellt werden.

11. Verfahren gemäß irgendeinem der Ansprüche 1, 8 bis 10, **dadurch gekennzeichnet, dass** die reinen Säfte, die aus Konzentraten hergestellten Säfte, die Nektare von Früchten und/oder Gemüsen auf der Basis folgender Mischungen hergestellt werden:
Karotten - Zitronen; Tomaten, Karotten, Sellerie, Zitronen, rote Beete, Blattsalat Zwiebeln; Tomaten, Sellerie, Zitronen; Karotten, Orangen; Tomaten, Karotten, Sellerie, Zitronen, rote Beete, Pampelmusen, Orangen.

12. Verfahren gemäß irgendeinem der vorausgegangenen Ansprüche, **dadurch gekennzeichnet, dass** die reinen Säfte, die aus Konzentraten hergestellten Säfte, die Nektare von Früchten und/oder Gemüsen mit Milch oder Milchprodukten vermischt sind.
